# FASCICULE DE BREVET EUROPEEN

(11) **EP 0 276 028 B1**
(45) Date de publication et mention de la délivrance du brevet: **31.08.1994**
(21) Numéro de dépôt: 88103053.0
(22) Date de dépôt: 10.10.1984
(51) Int. Cl.: G05D 23/19, F03G 7/06

(54) **Perfectionnements aux dispositifs de régulation thermostatiques**
Thermostatische Regelvorrichtungen
Thermostatic-regulation devices

(30) Priorité: 11.10.1983 FR 8316159
(43) Date de publication de la demande: 27.07.1988
(62) Demande divisionnaire de: 84402039.6
(73) Titulaire: DAUPHINOISE THOMSON Société anonyme dite:, F-38100 Grenoble (FR)
(72) Inventeur: Nouvelle, Robert, F-38640 Claix (FR); Segura, Jean Louis, F-38500 Voiron (FR)
(74) Mandataire: Casalonga, Axel

(56) Documents cités:
- FR-A- 2 179 952
- FR-A- 2 456 838
- GB-A- 1 146 122
- GB-A- 2 114 292
- US-A- 2 777 662
- US-A- 3 029 595
- US-A- 3 263 411
- US-A- 3 442 078

## Description

La présente invention concerne un dispositif de commande thermique du type comprenant une capsule creuse ménageant une chambre, dont l'une des parois d'extrémité est traversée par un piston et qui est remplie par un produit dilatable dont le volume varie avec la température de manière à transformer la variation de volume du produit en un déplacement axial dudit piston ainsi qu'un moyen thermique en contact thermique avec ledit produit de manière à faire varier sa température en vue de déplacer axialement ledit piston ou de contrôler son déplacement par rapport à ladite capsule.

Des dispositifs de commande thermiques de ce genre sont actuellement utilisés notamment dans le domaine de l'automobile. Le moyen thermique est formé par un fluide circulant à l'extérieur de la capsule, le piston servant à réguler un clapet en fonction de la température du fluide.

On connaît également par le brevet FR-A-2 456 838 un dispositif de commande thermique disposé dans le fluide circulant dans une conduite dans lequel le corps du dispositif est mobile tandis que le piston est fixe. Dans ce dispositif connu, on a prévu également une ampoule cylindrique dans la chambre remplie du produit dilatable qui est fixée au piston et qui renferme une résistance électrique alimentée au travers du piston, du canal d'écoulement du fluide et de sa paroi.

On connaît par ailleurs par le brevet US-A-2 777 662 une capsule dont le fond est fixé d'un côté dans une conduite, son piston s'étendant dans le canal de cette conduite et actionnant un clapet. Lorsque ce clapet est fermé, le fluide qui entoure la capsule stagne autour de la capsule.

La présence invention a pour but de remédier aux inconvénients de l'état de la technique et d'augmenter les possibilités d'utilisation des dispositifs de commande thermique du type précité, d'améliorer considérablement le contrôle et/ou la vitesse de la variation du volume du produit dilatable contenu dans la capsule de manière simple afin de diminuer les temps de réponse et de proposer des structures de liaisons simples à fabriquer permettant cependant de résister aux pressions internes du produit dilatable très élevées. La présente invention a également pour but de remédier aux inconvénients de l'état de la technique en proposant des montages particulièrement avantageux d'un dispositif de commande thermique dans une conduite.

Tel qu'il est revendiqué, le dispositif de commande thermique, monté dans une conduite, comprend une capsule creuse ménageant une chambre, dont l'une des parois d'extrémité est traversée par un piston de commande et qui est remplie par un produit dilatable dont le volume varie avec la température de manière à transformer la variation de volume du produit dilatable en un déplacement axial dudit piston par rapport à ladite capsule, ainsi qu'un moyen thermique s'étendant dans ledit produit de manière à faire varier sa température, ledit moyen thermique étant porté par la paroi formant fond de ladite capsule opposée à sa paroi traversée par ledit piston et comprenant une résistance électrique, ce moyen thermique étant susceptible d'être activé au travers de la paroi formant fond de ladite capsule.

Selon l'invention, le corps de ladite capsule s'étend au travers du canal d'écoulement d'une conduite et est fixé de façon étanche dans une ouverture ménagée dans la paroi de cette conduite, de part et d'autre de son canal d'écoulement, le fluide circulant dans ce dernier étant en contact avec la paroi extérieure de ladite capsule, de telle sorte que la position dudit piston de commande, qui s'étend à l'extérieur de ladite conduite, ou ses variations de position, peuvent être commandées ou contrôlées par les actions sur le produit dilatable précité dudit moyen thermique, activé extérieurement à ladite conduite, et/ou de la température du fluide circulant dans cette conduite.

Dans une variante d'utilisation de l'invention, ledit piston de commande s'étend à l'intérieur d'une autre conduite et constitue l'organe de commande d'un clapet prévu dans cette autre conduite.

Selon l'invention, ledit piston peut avantageusement agir sur ledit clapet dans le sens qui l'éloigne de son siège, un ressort agissant sur ce clapet dans le sens qui le rapproche de son siège.

Selon l'invention, ledit moyen thermique peut comprendre une résistance électrique qui s'étend à l'intérieur de ladite capsule et dont les extrémités sont respectivement fixées aux extrémités intérieures de broches conductrices et isolées électriquement qui s'étendent de façon étanche au travers de la paroi formant fond de ladite capsule.

Selon l'invention, ladite résistance électrique peut être imprimée sur un support isolant.

Selon l'invention, ledit support isolant peut s'étendre sur le pourtour de ladite chambre, ladite résistance électrique étant imprimée sur la face intérieure de ce support isolant.

Selon l'invention, ledit moyen thermique peut comprendre une résistance électrique qui s'étend dans ladite capsule, cette résistance électrique étant une résistance filaire blindée qui comprend une enveloppe entourant un fil électrique, cette enveloppe étant isolée électriquement de ce fil électrique et conductrice de la chaleur, les extrémités de son enveloppe étant soudées de façon étanche à la paroi formant fond de ladite capsule et les extrémités de son fil électrique étant connectables électriquement, à l'extérieur de ladite capsule.

Selon l'invention, ledit moyen thermique peut comprendre au moins un conduit pour un fluide caloporteur, ce conduit s'étendant au travers de la paroi formant fond de ladite capsule de manière à s'étendre à l'intérieur de cette dernière, une résistance électrique étant thermiquement associée à ce conduità l'extérieur de ladite capsule.

Selon l'invention, ladite paroi formant fond de ladite capsule peut être formée par une pièce séparée sur laquelle est montée ledit moyen thermique et qui est ultérieurement assemblée de façon étanche au corps de ladite capsule.

Selon l'invention, la paroi intérieure de ladite capsule peut être, au moins en partie, recouverte d'un matériau thermiquement isolant.

La présente invention sera mieux comprise à l'étude de dispositifs de commande thermique décrits à titre d'exemples non limitatifs et illustrés par le dessin sur lequel :
- la figure 1 représente en coupe axiale une première variante de réalisation du dispositif de commande thermique selon la présente invention ;
- la figure 2 représente en coupe axiale un autre dispositif de commande thermique, ce dispositif de commande thermique étant monté dans une conduite ;
- la figure 3 représente en coupe axiale une autre variante de réalisation du dispositif de commande thermique selon la présente invention ;
- la figure 4 représente en coupe axiale un dispositif de réalisation se rapprochant du dispositif de réalisation de la figure 1 mais de structure différente ;
- la figure 5 représente en coupe axiale une autre variante de réalisation du dispositif de commande thermique selon la présente invention ;
- la figure 6 représente également en coupe axiale une autre variante de réalisation du dispositif de commande thermique selon la présente invention ;
- et la figure 7 représente en coupe axiale un dispositif de commande thermique selon la présente invention monté sur une conduite.

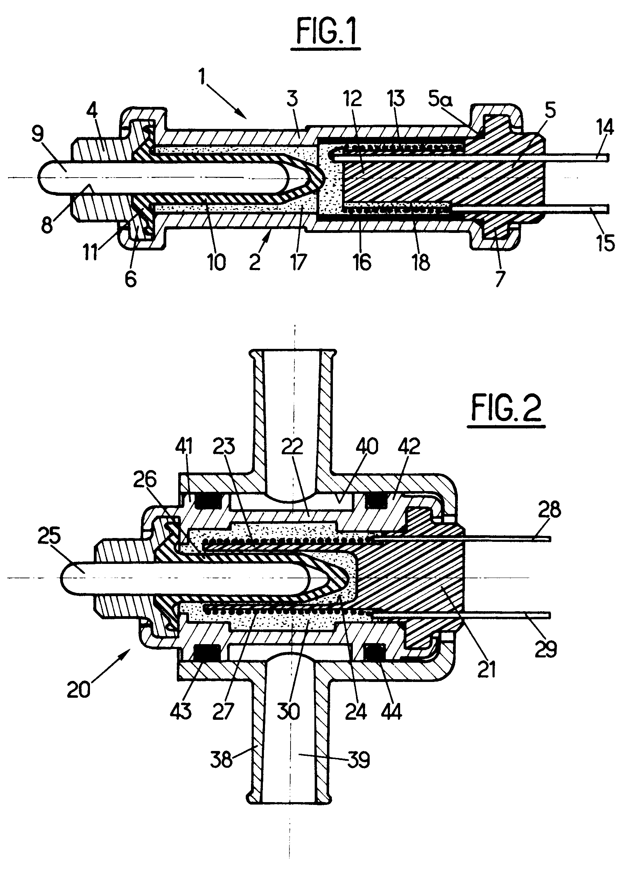

En se reportant à la figure 1, on voit que le dispositif de commande thermique repéré d'une manière générale par la référence 1 et représenté sur cette figure comprend une capsule creuse 2 qui est formée par un corps 3 dont la paroi est cylindrique et dont l'une des extrémités est bouchée par une bague 4 et l'autre extrémité est bouchée par un bloc 5, la bague 4 et le bloc 5 présentant respectivement des épaulements annulaires 6 et 7 qui sont sertis sur les extrémités correspondantes du corps cylindrique 3, un joint d'étanchéité annulaire 5a étant prévu entre le bloc 5 et le corps 3.

La bague d'extrémité 4 présente un passage axial 8 au travers duquel s'étend axialement un piston ou tige de commande 9 et dans lequel ce piston 9 est susceptible d'être guidé lors de ses déplacements axiaux. L'extrémité du piston 9 qui s'étend à l'intérieur de la capsule 2 est enveloppé par une membrane souple 10 qui présente une lèvre annulaire 11 en contact avec l'épaulement 6 de la bague 4 et sertie sur l'extrémité correspondante du corps 3 en même temps que cet épaulement 6.

Le bloc 5 qui est en un matériau électriquement isolant et qui forme la paroi de fond de la capsule 2 opposée à son piston 9 présente une partie cylindrique 12 qui s'étend axialement au corps 3 en direction de l'extrémité intérieure du piston 9 de telle sorte qu'un espace annulaire existe entre cette partie en saillie 12 et la paroi du corps cylindrique 3 qui lui est adjacente.

Autour de la partie en saillie 12 du bloc 5 est enroulée une résistance électrique chauffante filaire 13 qui s'étend donc à l'intérieur de la capsule 2, des broches plates 14 et 15 en un matériau conducteur de l'électricité s'étendant au travers du bloc 5 et débouchant à l'extrémité de ce bloc étant prévues en vue de l'alimentation en énergie électrique de la résistance électrique 13, le bloc 5 étant moulé autour de ces broches de telle sorte que la liaison entre les broches 14 et 15 et le bloc 5 soit étanche.

La partie de la paroi intérieure du corps 3 en regard de la résistance électrique 13 est recouverte d'un matériau thermiquement isolant 16.

Le volume intérieur libre de la capsule 12 qui notamment enveloppe la membrane souple 10 ainsi que la partie en saillie 12 du bloc 5 est rempli d'un produit 17 dont le volume varie en fonction de la température, ce produit 17 étant en général constitué par de la cire, de telle sorte que la résistance électrique filaire 13 est noyée dans ce produit 17 et est en contact thermique direct avec le produit dilatable 17 sur toute sa longueur.

Afin d'améliorer le contact entre la résistance électrique 13 et le produit 17, la partie en saillie 12 du bloc 5 présente; à sa périphérie, des rainures axiales 18.

Le dispositif de régulation thermique 1 représenté sur la figure 1 fonctionne de la manière suivante.

Par l'intermédiaire des broches 14 et 15 qui s'étendent à l'extérieur de la capsule 2, il est possible d'alimenter en énergie électrique la résistance électrique filaire 13. Ce faisant, cette résistance électrique chauffe le produit 17 qui en conséquence se dilate et cette variation de volume provoque un déplacement du piston 9 vers l'extérieur. En contrôlant l'énergie électrique d'alimentation de la résistance électrique 13, il est possible de contrôler le taux de variation de volume du produit 17 et en conséquence le déplacement et la vitesse de déplacement du piston 9.

On a vu que dans le dispositif de commande thermique 1 représenté sur la figure 1, le piston 9 et la partie en saillie 12 du bloc 5 sont axialement l'un en face de l'autre. Le dispositif de régulation thermique représenté sur la figure2 et repéré d'une manière générale par la référence 20 présente un bloc 21 correspondant au bloc 5 dont la structure permet de réduire la longueur de son corps cylindrique 22 par rapport à la longueur du corps cylindrique 3 du dispositif de régulation thermique 1 représenté sur la figure 1.

En effet, la partie intérieure en saillie 23 du bloc 21 présente un évidement axial 24 dans lequel s'étend le piston 25 entouré de la membrane 26 en ménageant un espace annulaire libre. L'espace intérieure libre de l'évidement 24 du bloc 21 et l'espace situé entre la paroi extérieure de la partie en saillie 23 sur laquelle est enroulée une résistance chauffante filaire 27, susceptible d'être alimentée par l'intermédiaire de ses broches 28 et 29 qui s'étendent au travers du bloc 21 et vers l'extérieur, et la paroi intérieure du corps cylindrique 23 communiquent à l'extrémité de la partie en saillie 23 et sont remplis d'un produit dilatable 30, la résistance électrique filaire 27 étant en contact thermique direct avec le produit dilatable 30 sur toute sa longueur.

A part ces différences, le dispositif de régulation thermique 20 de la figure 2 est réalisé de manière équivalente au dispositif de régulation thermique 1 représenté sur la figure 1 et fonctionne de la même manière. On pourra remarquer cependant que la paroi interne du corps 22 n'est plus recouverte de matériau isolant thermique. Par ailleurs, dans une variante de réalisation, la partie en saillie 23 pourrait être formée par des branches s'étendant axialement et délimitant l'évidement 24.

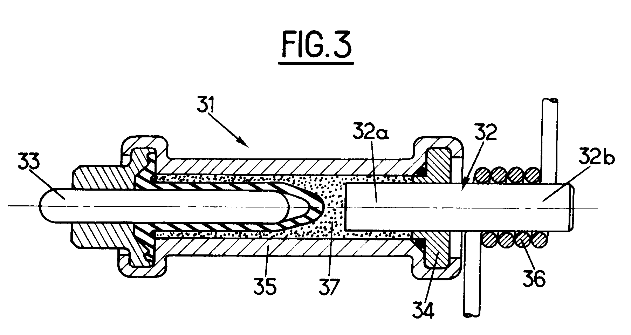

Le dispositif de régulation thermique qui est représenté sur la figure 3 et repéré d'une manière générale par la référence 31 se différencie des dispositifs de régulation thermique 1 et 20 décrits précédemment par le fait que les résistances chauffante 13 et 27 portées par les blocs 5 et 21 sont remplacées, dans cet exemple, par un tube caloporteur ou caloduc 32 qui s'étend axialement en face du piston 33 et qui est porté par une bague 34, cette bague étant montée par sertissage sur l'extrémité correspondante du corps cylindrique 35 et constituant la paroi formant fond de la capsule opposée à son piston 33. Le caloduc 32 s'étend au travers de la bague 34 et y est fixé de manière étanche par exemple par soudage, de manière à présenter une extrémité 32a qui s'étend à l'intérieur du corps cylindrique 35 tandis que son autre extrémité 32b s'étend à l'extérieur.

Dans l'exemple représenté sur la figure 3, l'extrémité extérieure 32b du caloduc 32 est entourée par un enroulement 36. Cet enroulement 36 peut être formé par une résistance chauffante qui lorsqu'elle est alimentée en énergie électrique chauffe le produit dilatable 37 que renferme le dispositif de régulation thermique 31, provoquant ainsi sa dilatation et en conséquence le déplacement axial du piston 33 vers l'extérieur. En agissant sur l'énergie électrique d'alimentation de l'enroulement 36, on peut faire varier la température du caloduc 32 et ainsi réguler le déplacement ou la vitesse de déplacement du piston 33, comme précédemment. Bien entendu, il serait possible de prévoir plusieurs caloducs 32, ces caloducs pouvant s'étendre dans l'espace séparant le piston 33 de la paroi intérieure du corps cylindrique 35.

En se reportant à la figure 2, on voit que le dispositif de régulation thermique 20 représenté sur cette figure est monté sur une portion de conduite 38 présentant un canal d'écoulement 39, les dispositifs de régulation thermique des autres figures pouvant être agencés dans le même but. Cette portion de conduite 38 présente une chambre cylindrique 40 qui s'étend perpendiculairement au canal d'écoulement 39 et qui est ouverte à ses deux extrémités. Le dispositif de régulation thermique 20 est monté dans cette chambre 40 de telle sorte que les deux épaulements annulaires extérieurs 41 et 42 que présente le corps cylindrique 22 soient placés de part et d'autre du canal d'écoulement 39. Entre les épaulements 41 et 42 et la paroi cylindrique de la chambre 40 sont prévus des joints d'étanchéité annulaires 43 et 44. Il s'ensuit que le fluide amené à circuler dans le canal d'écoulement 39 circule également autour du corps 22 du dispositif de régulation thermique 20 et d'autre part que le piston 25 s'étend à l'extérieur de la conduite 38 et que la face extérieure du bloc 21 est tournée vers l'extérieur de telle sorte que les broches 28 et 29 sont accessibles extérieurement à la conduite 38.

Ainsi, la position du piston 25 ou ses variations de positions peuvent être commandées ou contrôlées par une combinaison des actions respectives sur le produit dilatable 30 de la résistance chauffante 27 alimentée extérieurement à la conduite 38 et au dispositif de régulation 20 et du fluide circulant dans le canal d'écoulement 39 autour du corps 22.

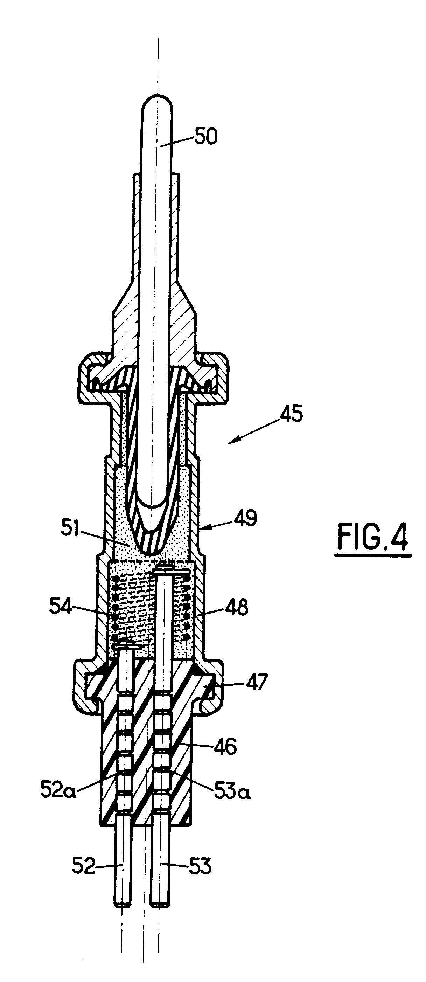

En se reportant à la figure 4, on voit qu'on a représenté un dispositif de régulation thermique repéré d'une manière générale par la référence 45 qui se rapproche des dispositifs de régulation thermique représentés sur les figures 1 et 2 et qui fonctionne de la même manière . Il s'en différencie de la manière suivante. Son bloc 46 en un matériau électriquement isolant, qui présente un épaulement annulaire 47 serti de façon étanche à l'une des extrémités du corps cylindrique 48 de la capsule creuse 49 et qui constitue la paroi formant fond de cette capsule 49 opposée à son piston 50, ne comprend pas de partie en saillie s'étendant à l'intérieur de la chambre 51 renfermant le produit dilatable. Le bloc 46 est traversé par des broches conductrices cylindriques 52 et 53 et que la résistance électrique filaire 54 dont les extrémités sont reliées aux extrémités intérieures des broches 52 et 53 s'étend dans la chambre 51 sous la forme d'un serpentin cylindrique et est suspendu et rigide. Les broches 52 et 53 présentent des séries de gorges 52a et 53a situées dans le bloc 46 dans lesquelles pénètre le matériau du bloc 46 lors du moulage de ce bloc autour des broches 52 et 53 afin d'assurer l'étanchéité le long de ces dernières.

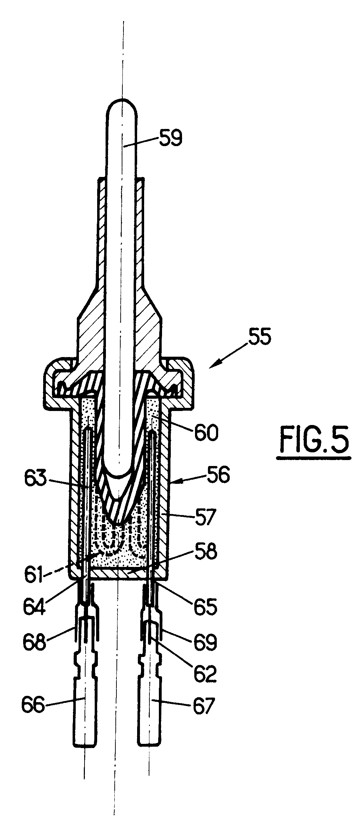

Dans le dispositif de régulation thermique représenté sur la figure 5 et repéré d'une manière générale par la référence 55, cette fois, la capsule creuse 56 comprend un corps cylindrique 57 et une paroi formant fond 58, opposée au piston 59, qui sont en une seule pièce, le piston 59 étant monté sur l'autre extrémité du corps 57 de la capsule 56 de la même manière que précédemment.

Dans la chambre intérieure 60 de la capsule 56 qui est remplie, comme précédemment, par un produit dilatable s'étend une résistance électrique blindée filaire 61 qui présente des spires axiales formant un cylindre. Cette résistance électrique filaire blindée comprend un fil électrique intérieur conducteur 62 entouré par une enveloppe 63 par exemple en acier inoxydable, le fil électrique 62 et l'enveloppe 63 étant isolés électriquement. Les extrémités 64 et 65 de cette résistance blindée filaire 63 traversent la paroi formant fond 58 de la capsule creuse 56, l'enveloppe 63 de ces extrémités 64 et 65 étant soudées de façon étanche, par l'extérieur, sur la paroi formant fond 58 tandis que des connexions électriques 66 et 67 sont reliées électriquement aux extrémités du fil électrique 62 et sont portées par les extrémités de l'enveloppe 63 extérieures à la capsule 56 par l'intermédiaire de bagues isolantes 68 et 69. Cette fois également, la résistance électrique filaire 61 est portée par la paroi formant fond 58 et est suspendue dans le produit dilatable 60.

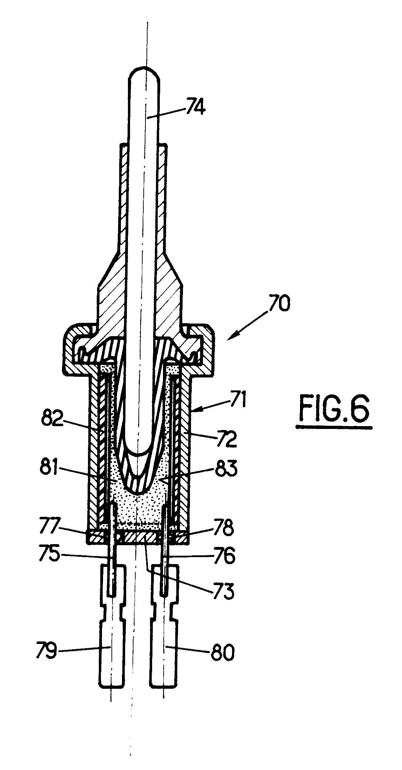

Dans l'exemple de réalisation de la figure 6, le dispositif de régulation thermique repéré d'une manière générale par la référence 70 comprend une capsule 71 qui présente un corps cylindrique 72 et une paroi formant fond 73 opposée à son piston 74, cette paroi 73 étant formée par une plaque soudée de manière étanche à l'extrémité correspondante du corps cylindrique 72.

Cette paroi formant fond 73 est traversée par deux broches conductrices 75 et 76, des bagues 77 et 78 isolantes électriquement, par exemple en verre, étant disposées autour des broches 75 et 76 et à l'intérieur des orifices de la paroi formant fond 73 traversée par les broches 75 et 76 de manière à créer une liaison étanche, les extrémités extérieures des broches 75 et 76 portant des connexions électriques 79 et 80.

A l'intérieur de la chambre 81 de la capsule 71, remplie comme précédemment par un produit dilatable, est disposé un support souple 82 en un matériau électriquement isolant, qui est en appui contre la paroi intérieure du corps 72 et sur la face intérieure duquel est imprimée une résistance plate 83 dont les extrémités sont connectées aux extrémités intérieures des broches 75 et 76, cette résistance plate présentant donc une face en contact thermique direct avec le produit dilatable 81.

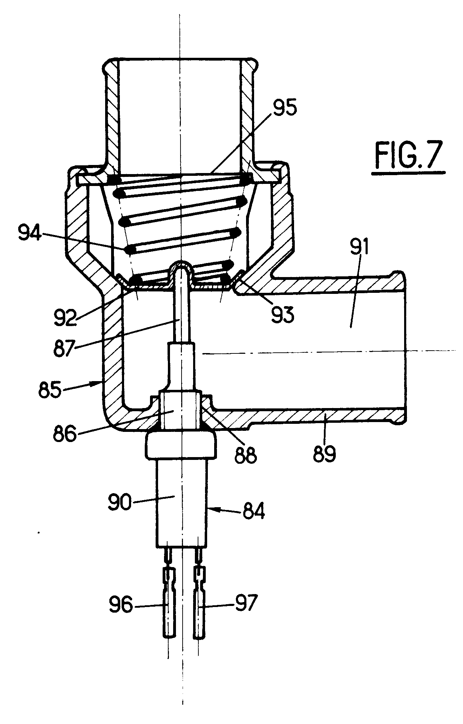

En se reportant à la figure 7, on voit qu'on a monté un dispositif de régulation thermique 84 sur un élément de conduite 85 par exemple d'un circuit de refroidissement d'un moteur automobile.

Ce dispositif de régulation thermique 84 pourrait être constitué par l'un des dispositifs décrits ci-dessus. Il est monté sur la conduite 85 de la manière suivante. Sa bague 86 qui est traversée par son piston 87 est filetée et vissée dans uneouverture 88 de la paroi 89 de la conduite 85 de telle sorte que son corps 90 s'étende en entier à l'extérieur de la conduit 85 et que sa tige 87 s'étende à l'intérieur du canal 91 de cette conduite 85. L'extrémité du piston 86 est en appui sur un clapet 92 de fermeture du canal 91 de la conduite 85 de telle sorte que, quand elle sort de la capsule 90, ce clapet 92 s'éloigne d'un siège de clapet 93, un ressort 94 qui est en appui d'une part sur le clapet 92 et d'autre part sur une surface annulaire 95 située de l'autre côté de la tige 87 par rapport au clapet 92 agissant sur le clapet dans le sens qui le rapproche de son siège 93.

En alimentant en énergie électrique la résistance contenue dans le produit dilatable que renferme la capsule 90 pour faire varier son volume et déplacer le piston 87 axialement par l'intermédiaire des connexions 96 et 97 extérieures à la conduite 85 à partir d'une source d'énergie électrique contrôlée et réglée, il est possible de réguler la position du clapet 92 par rapport à son siège 93 de manière à réguler l'écoulement du fluide dans le canal 91 de la conduite 85, cette régulation pouvant être effectuée en fonction en particulier de paramètres de fonctionnement du moteur.

On va maintenant décrire d'une manière générale comment il est possible de monter de manière simple les résistances électriques des dispositifs de régulation thermique décrits ci-dessus.

Dans les dispositifs de régulation thermique des figures 1, 2 et 4, on dispose de blocs constituant des pièces séparées qui portent, de moulage, des broches. On forme et monte les résistances électriques filaires sur ces blocs dans les dispositions qui ont été indiquées, on enfile l'extrémité des blocs portant les résistances électriques dans les corps des capsules et on sertit ces blocs sur l'extrémité appropriée de ces corps en insérant un joint d'étanchéité et le montage des résistances est terminé.

Dans l'exemple de la figure 5, on forme une résistance électrique filaire blindée dans la-configuration indiquée, on perce deux trous au travers de la paroi formant fond de la capsule, on dispose la résistance ainsi formée dans le corps de la capsule par son extrémité devant recevoir ultérieurement le piston de telle sorte que ses extrémités traversent lesdits trous, on soude les extrémités de l'enveloppe de la résistance électrique filaire blindée sur cete paroi formant fond et on monte les connexions électriques appropriées sur les extrémités du fil électrique intérieur de cette résistance blindée et le montage de la résistance électrique blindée filaire est terminé.

Dans l'exemple de la figure 6, on dispose une plaque destinée à former la paroi de fond de la capsule. On monte au travers de cette plaque deus broches par l'intermédiaire de bagues isolantes et d'étanchéité, on réalise une résistance électrique imprimée sur un support isolant souple, on forme avec ce support isolant un cylindre de telle sorte que la résistance électrique imprimée soit à l'intérieur, on soude l'une des extrémités des broches aux extrémités de la résistance électrique imprimée, on monte sur les autres extrémités des broches des connexions électriques, on enfile le support isolant portant la résistance électrique imprimée dans le corps de la capsule et on soude de manière étanche la paroi formant fond sur l'extrémité du corps de la capsule et le montage de la résistance électrique imprimée est terminé.

Dans l'exemple représenté sur la figure 3, on monte le caloduc dans l'orifice d'une bague et on le soude, on monte cette bague par sertissage sur l'extrémité du corps de la capsule et on enroule autour de l'extrémité du caloduc extérieur à la capsule une résistance électrique.

Il ressort des exemples qui précèdent que le dispositif de régulation thermique selon la présente invention est de structure simple et facile à monter et donc présente des coûts de fabrication relativement faibles, qu'il assure une très bonne dispersion de la chaleur vers le produit dilatable et donc ne nécessite pas des puissances électriques de commande élevées et que les moyens pour effectuer les liaisons électriques sont simples et fiables. De plus, du fait que les liaisons électriques à une source d'énergie sont prévues extérieurement à sa paroi formant fond opposée à son piston, son montage sur une conduite de fluide, afin d'utiliser son piston comme organe de commande, est particulièrement simple et fiable.

La présente invention ne se limite pas cependant aux exemples ci-dessus décrits. Elle peut en effet présenter de nombreuses variantes de réalisation et d'application. Par exemple, les dispositifs de régulation thermique selon la présente invention peuvent être utilisés pour réguler rapidement la position de leviers de commande, de soupapes et autres organes à commander en fonction de paramètres extérieurs à partir desquels l'action du moyen thermique sur le produit dilatable est réglé par régulation d'une source d'énergie électrique.

## Revendications

1. Dispositif de commande thermique, monté dans une conduite, comprenant une capsule creuse ménageant une chambre, dont l'une des parois d'extrémité est traversée par un piston de commande et qui est remplie par un produit dilatable dont le volume varie avec la température de manière à transformer la variation de volume du produit dilatable en un déplacement axial dudit piston par rapport à ladite capsule, ainsi qu'un moyen thermique (13, 27, 32, 54, 61, 83) s'étendant dans ledit produit de manière à faire varier sa température, ledit moyen thermique étant porté par la paroi formant fond (5, 21, 46, 58, 73) de ladite capsule opposée à sa paroi traversée par ledit piston et comprenant une résistance électrique (13, 27, 36, 54, 61, 83), ce moyen thermique étant susceptible d'être activé au travers de la paroi formant fond de ladite capsule, caractérisé par le fait que le corps (22) de ladite capsule (20) s'étend au travers du canal d'écoulement (39) d'une conduite (38) et est fixé de façon étanche dans une ouverture ménagée dans la paroi de cette conduite, de part et d'autre de son canal d'écoulement, le fluide circulant dans ce dernier étant en contact avec la paroi extérieure (22) de ladite capsule (20), de telle sorte que la position dudit piston de commande (25), qui s'étend à l'extérieur de ladite conduite, ou ses variations de position, puissant être commandées ou contrôlées par les actions sur le produit dilatable précité dudit moyen thermique, activé extérieurement à ladite conduite, et/ou de la température du fluide circulant dans cette conduite.

2. Dispositif de commande thermique selon la revendication 1, caractérisé par le fait que ledit piston de commande (87) s'étend à l'intérieur d'une autre conduite (85) et constitue l'organe de commande d'un clapet (92) prévu dans cette autre conduite (85).

3. Dispositif de commande thermique selon la revendication 2, caractérisé par le fait que ledit piston (87) agit sur ledit clapet (92) dans le sens qui l'éloigne de son siège (93), un ressort (94) agissant sur ce clapet (92) dans le sens qui le rapproche de son siège (93).

4. Dispositif de commande thermique selon l'une quelconque des revendications précédentes, caractérisé par le fait que ledit moyen thermique comprend une résistance électrique qui s'étend à l'intérieur de ladite capsule et dont les extrémités sont respectivement fixées aux extrémités intérieures de broches conductrices et isolées électriquement (14, 15 ; 28, 29 ; 52, 53 ; 75, 76) qui s'étendent de façon étanche au travers de la paroi formant fond (5, 21, 46, 73) de ladite capsule.

5. Dispositif de commande thermique selon la revendication 4, caractérisé par le fait que ladite résistance électrique (83) est imprimée sur un support isolant (82).

6. Dispositif de commande thermique selon la revendication 5, caractérisé par le fait que ledit support isolant (82) s'étend sur le pourtour de ladite chambre (81), ladite résistance électrique (83) étant imprimée sur la face intérieure de ce support isolant (82).

7. Dispositif de commande thermique selon l'une quelconque des revendications 1 à 3, caractérisé par le fait que ledit moyen thermique comprend une résistance électrique qui s'étend dans ladite capsule, cette résistance électrique étant une résistance filaire blindée (61) qui comprend une enveloppe (63) entourant un fil électrique (62), cette enveloppe étant isolée électriquement de ce fil électrique et conductrice de la chaleur, les extrémités de son enveloppe (63) étant soudées de façon étanche à la paroi formant fond de ladite capsule (56) et les extrémités de son fil électrique (62) étant connectables électriquement, à l'extérieur de ladite capsule.

8. Dispositif de commande thermique selon l'une quelconque des revendications 1 à 3, caractérisé par le fait que ledit moyen thermique comprend au moins un conduit (32) pour un fluide caloporteur, ce conduit s'étendant au travers de la paroi formant fond (34) de ladite capsule de manière à s'étendre à l'intérieur de cette dernière, une résistance électrique (36) étant thermiquement associée à ce conduit (32) à l'extérieur de ladite capsule.

9. Dispositif de commande thermique selon l'une quelconque des revendications 4 à 8, caractérisé par le fait que ladite paroi formant fond de ladite capsule est formée par une pièce séparée (5, 21, 46, 73) sur laquelle est montée ledit moyen thermique (13, 27, 32, 54, 73) et qui est ultérieurement assemblée de façon étanche au corps de ladite capsule.

10. Dispositif de commande thermique selon l'une quelconque des revendications précédentes, caractérisé par le fait que la paroi intérieure de ladite capsule est, au moins en partie, recouverte d'un matériau thermiquement isolant (16).

## Patentansprüche

1. Thermische Regeleinrichtung, die in einer Röhre angeordnet ist, umfassend eine hohle, eine Kammer bildende Kapsel, wobei eine der Stirnwände der Kammer von einem Steuerkolben durchsetzt ist und die Kammer mit einem expandierbaren Produkt gefüllt ist, dessen Volumen sich mit der Temperatur ändert, um die Volumenänderung des expandierbaren Produkts in eine axiale Verschiebung jenes Kolbens gegenüber jener Kapsel umzuwandeln, sowie eine sich in jenes Produkt erstreckende thermische Vorrichtung (13, 27, 32, 54, 61, 83), um dessen Temperatur zu verändern, wobei diese thermische Vorrichtung von die Stirnseite (5, 21, 46, 58, 73) jener Kapsel gegenüber deren von jenem Kolben durchsetzten Wand gebildeten Wand getragen wird und einen elektrischen Widerstand (13, 27, 36, 54, 61, 83) enthält, wobei diese thermische Vorrichtung durch die die Stirnseite jener Kapsel bildende Wand hindurch aktivierbar ist, dadurch gekennzeichnet, daß sich der Körper (22) jener Kapsel (20) durch die Strömungsleitung (39) einer Röhre (38) erstreckt und in einer in der Wand dieser Röhre beidseits ihrer Strömungsleitung gebildeten Öffnung dicht befestigt ist, wobei die in dieser Leitung umlaufende Flüssigkeit mit der Außenwand (22) jener Kapsel (20) in Berührung steht, so daß die Stellung jenes sich außerhalb dieser Röhre erstreckenden Steuerkolbens (25) bzw. dessen Stellungsänderungen durch die Wirkungen jener von außerhalb der Röhre aktivierten thermischen Vorrichtung auf das oben erwähnte expandierbare Produkt und/oder der Temperatur der in dieser Röhre umlaufenden Flüssigkeit gesteuert oder reguliert werden können.

2. Thermische Regeleinrichtung nach Anspruch 1, dadurch gekennzeichnet, daß sich dieser Steuerkolben (87) innerhalb einer weiteren Röhre (85) erstreckt und das Stellglied zur Regelung einer in dieser weiteren Röhre (85) vorgesehenen Verschlußklappe (92) darstellt.

3. Thermische Regeleinrichtung nach Anspruch 2, dadurch gekennzeichnet, daß dieser Kolben (87) auf diese Verschlußklappe (92) in der Richtung wirkt, in welcher sie sich von ihrem Sitz (93) hinweg bewegt, wobei eine Feder (94) auf diese Verschlußklappe (92) in der Richtung wirkt, in der sie sich näher zu ihrem Sitz (93) hin bewegt.

4. Thermische Regeleinrichtung nach einem der vorhergehenden Ansprüche, dadurch gekennzeichnet daß jene thermische Vorrichtung einen elektrischen Widerstand enthält, der sich innerhalb jener Kapsel erstreckt und dessen Enden an den inneren Enden leitender bzw. elektrisch isolierter Stifte (14, 15; 28, 29; 52, 53; 75, 76) befestigt sind, die sich dicht durch die eine Stirnseite (5, 21, 46, 73) bildende Wand jener Kapsel hindurch erstrecken.

5. Thermische Regeleinrichtung nach Anspruch 4, dadurch gekennzeichnet, daß dieser elektrische Widerstand (83) auf einen isolierenden Träger (82) aufgedruckt ist.

6. Thermische Regeleinrichtung nach Anspruch 5, dadurch gekennzeichnet, daß sich diese isolierende Träger (82) über den Umfang jener Kammer (81) erstreckt, wobei dieser elektrische Widerstand (83) auf die Innenseite dieses isolierenden Trägers (82) aufgedruckt ist.

7. Thermische Regeleinrichtung nach einem der Ansprüche 1 bis 3, dadurch gekennzeichnet, daß diese thermische Vorrichtung einen sich in jene Kapsel erstreckenden elektrischen Widerstand umfaßt, der ein abgeschirmter drahtförmiger Widerstand (61) ist, welcher eine einen elektrischen Draht (62) umgebende Hülle (63) umfaßt, die von diesem elektrischen und wärmeleitenden Draht elektrisch isoliert ist, wobei die Enden von dessen Hülle (63) an die die Stirnseite jener Kapsel (56) bildende Wand dicht angeschweißt sind und die Enden ihres elektrischen Drahts (62) außerhalb jener Kapsel elektrisch verbindbar sind.

8. Thermische Regeleinrichtung nach einem der Ansprüche 1 bis 3, dadurch gekennzeichnet, daß diese thermische Vorrichtung mindestens eine Röhre (32) für eine Wärmeträgerflüssigkeit umfaßt, wobei sich diese Röhre durch die eine Stirnseite (34) jener Kapsel bildende Wand hindurch und somit innerhalb der letzteren erstreckt, wobei ein elektrischer Widerstand (36) außerhalb jener Kapsel dieser Röhre (32) thermisch zugeordnet ist.

9. Thermische Regeleinrichtung nach einem der Ansprüche 4 bis 8, dadurch gekennzeichnet, daß diese eine Stirnseite jener Kapsel bildende Wand durch ein getrenntes Teil (5, 21, 46, 73) gebildet wird, auf welchem jene thermische Vorrichtung (13, 27, 32, 54, 73) montiert ist, die danach mit dem Körper jener Kapsel dicht verbunden wird.

10. Thermische Regeleinrichtung nach einem der vorhergehenden Ansprüche, dadurch gekennzeichnet, daß die Innenwand jener Kapsel mindestens teilweise mit einem thermisch isolierenden Material (16) bedeckt ist.

## Claims

1. Thermal control device, mounted in a pipe, comprising a hollow capsule forming a chamber, one of the end walls of which is traversed by a control piston and which is filled by an expandable product the volume of which varies with the temperature so as to convert the variation in volume of the expandable product into an axial displacement of the said piston with respect to the said capsule, as well as a thermal means (13, 27, 32, 54, 61, 83) extending into the said product so as to cause its temperature to vary, the said thermal means being carried by the wall forming an end face (5, 21, 46, 58, 73) of the said capsule opposite its wall traversed by the said piston and comprising an electric resistor (13, 27, 36, 54, 61, 83), this thermal means being capable of being activated through the wall forming an end face of the said capsule, characterized by the fact that the body (22) of the said capsule (20) extends through the flow duct (39) of a pipe (38) and is fixed in leaktight fashion in an opening formed in the wall of this pipe, on either side of its flow passage, the fluid flowing through the latter being in contact with the outer wall (22) of the said capsule (20), so that the position of the said control piston (25) which extends outside the said pipe, or its variations in position, may be controlled or checked by the actions, on the aforementioned expandable product, of the said thermal means, activated externally to the said pipe, and/or of the temperature of the fluid flowing in this pipe.

2. Thermal control device according to Claim 1, characterized by the fact that the said control piston (87) extends inside another pipe (85) and constitutes the member for controlling a shutter (92) provided in this other pipe (85).

3. Thermal control device according to Claim 2, characterized by the fact that the said piston (87) acts on the said shutter (92) in the direction which moves it away from its seat (93), a spring (94) acting on this shutter (92) in the direction which moves it closer to its seat (93).

4. Thermal control device according to any one of the preceding claims, characterized by the fact that the said thermal means comprises an electric resistor which extends inside the said capsule and the ends of which are respectively fixed to the inner ends of conducting and electrically insulated pins (14, 15; 28, 29; 52, 53; 75, 76) which extend in leaktight fashion through the wall forming an end face (5, 21, 46, 73) of the said capsule.

5. Thermal control device according to Claim 4, characterized by the fact that the said electric resistor (83) is printed on an insulating support (82).

6. Thermal control device according to Claim 5, characterized by the fact that the said insulating support (82) extends over the perimeter of the said chamber (81), the said electric resistor (83) being printed on the inner face of this insulating support (82).

7. Thermal control device according to any one of Claims 1 to 3, characterized by the fact that the said thermal means comprises an electric resistor which extends into the said capsule, this electric resistor being a shielded filamentary resistor (61) which comprises a casing (63) surrounding an electric wire (62), this casing being electrically insulated from this electric wire and being a conductor of heat, the ends of its casing (63) being welded in leaktight fashion to the wall forming an end face of the said capsule (56), and the ends of its electric wire (62) being electrically connectable, outside the said capsule.

8. Thermal control device according to any one of Claims 1 to 3, characterized by the fact that the said thermal means comprises at least one duct (32) for a heat transfer fluid, this duct extending through the wall forming an end face (34) of the said capsule so as to extend inside the latter, an electric resistor (36) being thermally associated with this duct (32) outside the said capsule.

9. Thermal control device according to any one of Claims 4 to 8, characterized by the fact that the said wall forming an end face of the said capsule is formed by a separate component (5, 21, 46, 73) on which the said thermal means (13, 27, 32, 54, 73) is mounted and which is subsequently joined in leaktight fashion to the body of the said capsule.

10. Thermal control device according to any one of the preceding claims, characterized by the fact that the inner wall of the said capsule is, at least in part, covered with a thermally insulating material (16).
